# EUROPEAN PATENT APPLICATION

(11) **EP 2 503 452 A1**
(43) Date of publication of application: **26.09.2012**
(21) Application number: 10853101.3
(22) Date of filing: 03.09.2010
(51) Int. Cl.: G06F 9/30

(54) **DEVICE AND METHOD FOR REALIZING LARGE AMOUNT OF SHORT MESSAGES GROUP-SENDING**

(30) Priority: 18.06.2010 CN 201010202860
(71) Applicant: ZTE Corporation, Shenzhen, Guangdong 518057 (CN)
(72) Inventor: FANG, Xinyao, Shenzhen Guangdong 518057 (CN)
(74) Representative: South, Nicholas Geoffrey
(86) International application number: PCT/CN2010/076625
(87) International publication number: WO 2011/156991

(57) **Abstract**

The present invention provides an apparatus and method for implementing mass texting. In the present invention, when sending short messages massively, the synchronous transmission of each short message between the application CPU and communication CPU is ensured by the synchronization mechanism of the thread, which prevents the communication CPU being blocked caused by disorderly asynchronous sending. It achieves each mass texting of mobile phone users, and the number of telephone numbers of each mass texting can be unlimited.

## Description

### Field of the Invention

The present invention relates to the technical field of communication, and in particular to an apparatus and method for implementing mass texting.

### Background of the Invention

In an Android mobile phone with single chip and dual Central Processing Unit (CPU) architecture, the shared memory of communication CPU and application CPU is limited. All the information of dual CPU communication needs to pass through this shared memory. Therefore, the storage space left for short messages in the shared memory is very limited and it is generally a storage space for dozens of short messages. Thus, when dozens of short messages are sent at one time, and especially when hundreds of short messages are sent, the communication CPU will be blocked and causes the mass texting performance to be unstable, with slow speed, and easy to be lost,

In the related art, in order to prevent the communication CPU being blocked when sending short messages massively, a method of increasing short message storage space can be used. However, this will cause the storage space used for other services to be reduced significantly and it would be disadvantageous for the timely and rapid process of other services.

### Summary of the Invention

In the view of the above analysis, the present invention is intended to provide an apparatus and method for implementing mass texting so as to solve the problems existed in the related art that the communication CPU is blocked when sending short messages massively.

The present invention is mainly realized by the following technical solution.

The present invention provides an apparatus for implementing mass texting, comprising: a sending lock module and a sending unlock module, wherein
the sending lock module is configured for sending one short message in the short messages to be sent massively to the sending unlock module, requesting the sending unlock module to forward this short message to a communication CPU, and locking a short message sending thread after the sending unlock module forwards this short message to the communication CPU;
the sending unlock module is configured for forwarding this short message to the communication CPU according to the request of the sending lock module, and when receiving a acknowledgement of receipt of this short message returned by the communication CPU, unlocking the short message sending thread, and triggering the sending lock module to continue to send a next short message; and
the sending lock module and the sending unlock module repeatedly perform the above till the short messages to be sent massively are all sent.

Furthermore, a synchronization lock for locking the short message sending thread is preset, and the sending lock module is further configured for sending one short message in the short messages to be sent massively to the sending unlock module, requesting the sending unlock module to forward this short message to the communication CPU, and after the sending unlock module forwards this short message to the communication CPU, locking the short message sending thread by starting the synchronization lock, and waiting for unlock.

Furthermore, the sending unlock module is further configured for forwarding this short message to the communication CPU according to the request of the sending lock module, and judging whether a acknowledgement of receipt of this short message returned by the communication CPU is received within a predetermined time: if yes, then unlocking the synchronization lock and triggering the sending lock module to continue to send a next short message; otherwise, unlocking the synchronization lock, setting that the short message is sent unsuccessfully, triggering the sending lock module to continue to send a next short message, and triggering the sending lock module to resend this short message which is sent unsuccessfully after other short messages to be sent are all sent.

The present invention further provides a method for implementing mass texting which employs an apparatus for implementing mass texting, the apparatus comprising a sending lock module and a sending unlock module, and the method comprising:
Step A: the sending lock module sends one short message in the short messages to be sent massively to the sending unlock module, requests the sending unlock module to forward this short message to a communication CPU, and locks a short message sending thread after the sending unlock module forwards this short message to the communication CPU;
Step B: the sending unlock module forwards this short message to the communication CPU according to the request of the sending lock module and unlocks the short message sending thread when receiving the acknowledgement of receipt of this short message returned by the communication CPU, and turn to step A to continue to send a next short message; and
repeatedly performing steps A and B till the short messages to be sent massively are all sent.

Furthermore, a synchronization lock for locking short message sending thread is preset, and the step A further includes the following:
the sending lock module sending one short message in the short messages to be sent massively to the sending unlock module, requesting the sending unlock module to forward this short message to a communication CPU, and after the sending unlock module forwards this short message to the communication CPU, locking the short message sending thread by starting the synchronization lock and waiting for unlock.

Furthermore, the step B further includes the following:
the sending unlock module forwarding this short message to the communication CPU according to the request of the sending lock module, and judging whether a acknowledgement of receipt of this short message returned by the communication CPU is received within a predetermined time:
if yes, then unlocking the synchronization lock and turn to step A to continue to send a next short message; otherwise, unlocking the synchronization lock, setting that the sending of this short message is failed, turn to step A to continue to send a next short message, and triggering the sending lock module to resend this short message which is sent unsuccessfully after other short messages to be sent are all sent.

The beneficial effects of the present invention are as follows:
the embodiments of the present invention provide an apparatus and method for implementing mass texting, which solves the problem that the communication CPU is blocked and the short messages cannot be sent out timely when a dual CPU architecture mobile phone sends hundreds of short messages massively.

Other features and advantages of the present invention will be described in the following description and partly become obvious from the description, or be understood by implementing the present invention. The objects and other advantages of the present invention can be realized and obtained through the structures specially indicated by the description, claims and drawings.

### Brief Description of the Drawings

Fig. 1 is a structural schematic diagram of an apparatus according to the embodiments of the present invention;
Fig. 2 is a sequence diagram of a method for mass texting according to the embodiments of the present invention;
Fig. 3 is a schematic diagram of the flow of a method according to the embodiments of the present invention; and
Fig. 4 is a schematic diagram of another flow of a method according to the embodiments of the present invention.

### Detailed Description of the Embodiments

The preferred embodiments of the present invention will be described in detail in conjunction with the drawings hereinafter. The drawings constitute part of the present application and are used for explaining the principles of the present invention together with the embodiments of the present invention. For the sake of being clear and concise, when it may cause the subject of the present invention to be vague, the detailed and specific description of the already known functions and structures of the devices described herein will be omitted.

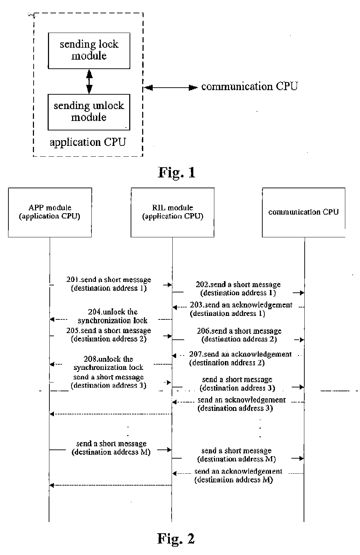

The apparatus according to the embodiments of the present invention will be first described in detail in conjunction with Fig. 1.

As shown in Fig. 1, Fig. l is a structural schematic diagram of an apparatus according to the embodiments of the present invention. The apparatus can comprises: a sending lock module and a sending unlock module, wherein the function of the sending lock module can be realized by the APP (application) module in the application CPU in the embodiments of the present invention, and the function of the sending unlock module can be realized by the RIL (Radio Interface Layer) module in the application CPU in the embodiments of the present invention. The specific implementation of the APP module and RIL module will be described in detail below.

The APP module is mainly responsible for sending one short message in a plurality of short messages to be sent to the RIL module, requesting the RIL module to forward this short message to a communication CPU, and locking a short message sending thread after the RIL module sends this short message to the communication CPU. Specifically, a synchronization lock for locking the short message sending thread is preset, and the APP module sends one short message in a plurality of short messages to be sent to the RIL module, requests the RIL module to forward this short message to the communication CPU, and after the RIL module sends this short message to the communication CPU, locks the short message sending thread by starting the synchronization lock, and waits for unlock.

The RIL module forwards the short message sent by the APP module to the communication CPU, and after having received an acknowledgement of receipt of this short message returned by the communication CPU, unlocks the short message sending thread and triggers the APP module to continue to send a next short message. Specifically, the RIL module forwards the short message sent by the APP module to the communication CPU and judges whether the acknowledgement of receipt of this short message returned by the communication CPU is received within a predetermined time if yes, then unlock the synchronization lock and trigger the APP module to continue to send the next short message; otherwise, unlock the synchronization lock, set that the sending of this short message is failed, trigger the APP module to continue to send the next short message, and trigger the sending lock module to resend this short message after other short messages to be sent are all sent.

The APP module and RIL module repeatedly perform the above process till the short messages to be sent are all sent.

The particular implementation of the above apparatus according to the embodiments of the present invention will be described in detail in the following description of the method and specifically refers to Figs. 2 to 4, which will not be described here redundantly.

The method according to the embodiments of the present invention will be described in detail in conjunction with Figs. 2 to 4 hereinafter.

The method according to the embodiments of the present invention mainly comprises: the sending lock module requesting the sending unlock module to send a short message to the communication CPU and locks a short message sending thread after the sending unlock module forwards this short message to the communication CPU; and the sending unlock module unlocks the short message sending thread when receiving an acknowledgement of receipt of this short message returned by the communication CPU, and triggers the sending lock module to continue to send a next short message till the short messages to be sent are all sent.

As compared to the apparatus according to the embodiments of the present invention, the implementation of the APP module and RIL module is also used as an example to illustrate the method according to the embodiments of the present invention.

Fig. 2 is a sequence diagram of a method for mass texting according to the embodiments of the present invention. As shown in Fig. 2, a synchronization lock for locking a short message sending thread is set, and it is assumed that there are M short messages to be sent massively this time and they need to be sent to destination address 1, destination address 2, ..., and destination address M respectively. Specifically, the method can comprise the following steps:
Step S201:the APP module in the communication CPU sends one short message (destination address 1) in the short messages to be sent massively to the RIL module in the communication CPU and requests the RIL module to forward this short message (destination address 1) to the communication CPU;
Step 202: the RIL module sends this short message (destination address 1) to the communication CPU via remote calling, and then informs the APP module; and the short message sending thread in the APP module will start the synchronization lock and wait for unlock; at this moment, the short message sending thread is in the blocked state;
Step 203: a message receiving thread in the RIL module receives a message returned by the communication CPU within a predetermined time (such as 5s);
Step 204: the message receiving thread in the RIL module performs decoding process to the returned message, and unlocks the synchronization lock when confirming that this returned message is the acknowledgement of receipt of this short message (destination address 1);
Step 205: after the RIL unlocks the synchronization lock, the APP module continues to send a next short message (destination address 2) in the short messages to be sent massively to the RIL module;
Step 206: the RIL module sends this short message (destination address 2) to the communication CPU via remote calling, and then informs the APP module; and the short message sending thread in the APP module will start the synchronization lock and wait for unlock; at this moment, the short message sending thread is in the blocked state;
Step 207: the message receiving thread in the RIL module receives the message returned by the communication CPU within a predetermined time;
Step 208: the message receiving thread in the RIL module performs decoding process to the returned message, and unlocks the synchronization lock when confirming that this returned message is the acknowledgement of receipt of this short message (destination address 2); and
the above sending process is repeated till M short messages to be sent massively are all sent.

The method according to the embodiments of the present invention is described above from the perspective of mass texting sequence, and the particular implementation of the method according to the embodiments of the present invention will be described in detail hereinafter.

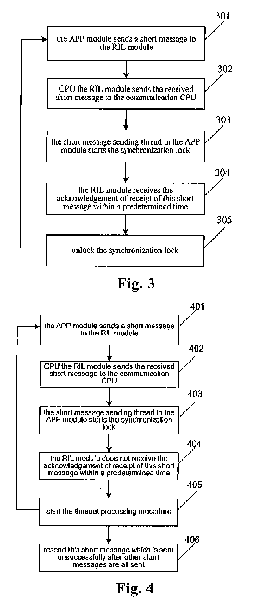

Fig. 3 is a schematic diagram of the flow of a method according to the embodiments of the present invention. As shown in Fig. 3, specifically the method can comprise the following steps:
Step 301: when the application CPU edits and adds the numbers of M short messages to be sent massively, the APP module in the communication CPU sends one short message in the short messages to be sent massively to the RIL module in the communication CPU;
Step 302: the RIL module sends this received short message to the communication CPU via remote calling and informs the APP module that this short message has been sent to the communication CPU;
Step 303: after the APP module learns that this short message has been sent to the communication CPU, the short message sending thread in the APP module starts the synchronization lock to enable this short message sending thread to be in the blocked state and waits for unlock;
Step 304: the message receiving thread in the RIL module performs decoding process to the message received within a predetermined time, and confirms that this message is the acknowledgement of this short message returned by the communication CPU after judgment; and
Step 305: the synchronization lock is unlocked, and turn to step 301 to continue to send the next short message.

Fig. 4 is a schematic diagram of another flow of a method according to the embodiments of the present invention As shown in Fig. 4, specifically the method can comprise the following steps:
Step 401: when the application CPU edits and adds the numbers of M short messages to be sent massively, the APP module in the communication CPU sends one short message to the RIL module in the communication CPU;
Step 402: it is judged that whether the number of the sent short messages is less than M, and if yes, then perform step 403, otherwise, it indicates that the mass texting is completed;
Step 403: the RIL module sends this received short message to the communication CPU via remote calling and informs the APP module that this short message has been sent to the communication CPU;
Step 404: after the APP module learns that this short message has been sent to the communication CPU, the short message sending thread in the APP module starts the synchronization lock to enable this short message sending thread to be in the blocked state and waits for unlock;
Step 405: the message receiving thread in the RIL module performs decoding process to the message received within a predetermined time; and when it is confirmed that this message is not the acknowledgement of this short message returned by the communication CPU after judgment, a timeout process procedure is started, i.e., the synchronization lock is unlocked, the state of this short message is set to be failed-to-sent, and turn to step 401 to send the next short message; and
Step 406: when other short messages to be sent are all sent, the resend procedure is started, i.e., this short message which is sent unsuccessfully is resent.

In summary, the embodiments of the present invention provide an apparatus and method for implementing mass texting, and the synchronous transmission of each short message between the application CPU and communication CPU is ensured by the synchronization mechanism of the thread during mass texting. It prevents the communication CPU being blocked caused by disorderly asynchronously sending. It realizes that mobile phone users can be mass texting for one time, and the number of telephone numbers of each mass texting can be unlimited. After each time one short message is sent out, the short message sending thread will start a synchronization lock and wait for unlock. In the message receiving thread, if the receiving communication CPU has received and sent the same normally, then the synchronization lock is unlocked. If no acknowledgement that the communication CPU has received and sent the same normally is received within a predetermined time, the synchronization lock is also unlocked, and the corresponding short message is set as in a non-sent state, and the resend procedure is started after other short messages to be sent are all sent.

In conclusion, the embodiments of the present invention solve the problem that the communication CPU is blocked and the short messages cannot be sent out timely when a dual CPU architecture mobile phone sends hundreds of short messages massively. Furthermore, the present invention does not need to increase the shared memory, and the number of short messages to be sent massively for one time can be unlimited and they can be sent out stably just by improving the internal procedure of mass texting.

What is described above is merely preferred implementation of the present invention. However, the protection scope of the present invention is not limited to this. Any changes or replacements in the disclosed technical scope of the present invention which can be easily thought of by those skilled in the art shall be covered in the protection scope of the present invention. Accordingly, the protection scope of the present invention should be subject to the protection scope of the claims.

## Claims

1. An apparatus for implementing mass texting, **characterized by** comprising: a sending lock module and a sending unlock module, wherein
the sending lock module is configured to send one short message in short messages to be sent massively to the sending unlock module, request the sending unlock module to forward the short message to a communication CPU, and lock a short message sending thread after the sending unlock module forwards the short message to the communication CPU;
the sending unlock module is configured to forward the short message to the communication CPU according to a request of the sending lock module, and when receiving an acknowledgement of receipt of the short message returned by the communication CPU, unlock the short message sending thread, and trigger the sending lock module to continue to send a next short message; and
the sending lock module and the sending unlock module repeatedly perform the above till the short messages to be sent massively are all sent.

2. The apparatus according to Claim 1, **characterized in that** a synchronization lock for locking the short message sending thread is preset, and the sending lock module is further configured to send one short message in the short messages to be sent massively to the sending unlock module, request the sending unlock module to forward the short message to the communication CPU, and after the sending unlock module forwards the short message to the communication CPU, lock the short message sending thread by starting the synchronization lock, and wait for unlock.

3. The apparatus according to Claim 2, **characterized in that** the sending unlock module is further configured to forward the short message to the communication CPU according to the request sent by the sending lock module, and judge whether an acknowledgement of receipt of the short message returned by the communication CPU is received within a predetermined time: if yes, then unlock the synchronization lock and trigger the sending lock module to continue to send a next short message; otherwise, unlock the synchronization lock, set that the short message is sent unsuccessfully, trigger the sending lock module to continue to send a next short message, and trigger the sending lock module to resend the short message which is sent unsuccessfully after other short messages to be sent are all sent.

4. The apparatus according to any one of Claims 1 to 3, **characterized in that** the sending lock module is an Application (APP) module which applies the Central Processing Unit (CPU), and the sending unlock module is a Radio Interface Layer (RIL) module which applies the CPU.

5. A method for implementing mass texting, **characterized in that** it employs an apparatus for implementing mass texting, the apparatus comprises a sending lock module and a sending unlock module, and the method comprises:
step A: sending, by the sending lock module, one short message in short messages to be sent massively to the sending unlock module, requesting the sending unlock module to forward the short message to a communication CPU, and locking a short message sending thread after the sending unlock module forwards the short message to the communication CPU;
step B: forwarding, by the sending unlock module, the short message to the communication CPU according to a request of the sending lock module, and when receiving an acknowledgement of receipt of the short message returned by the communication CPU, unlocking the short message sending thread, and turning to step A to continue to send a next short message; and
repeatedly performing steps A and B till the short messages to be sent massively are all sent.

6. The method according to Claim 5, **characterized in that** a synchronization lock for locking the short message sending thread is preset, and the step A further comprises:
sending, by the sending lock module, one short message in the short messages to be sent massively to the sending unlock module, requesting the sending unlock module to forward the short message to the communication CPU, and after the sending unlock module forwards the short message to the communication CPU, locking the short message sending thread by starting the synchronization lock, and waiting for unlock.

7. The method according to Claim 6, **characterized in that** the step B further comprises:
forwarding, by the sending unlock module, the short message to the communication CPU according to the request of the sending lock module, and judging whether an acknowledgement of receipt of the short message returned by the communication CPU is received within a predetermined time:
if yes, then unlocking the synchronization lock and turning to step A to continue to send a next short message; otherwise, unlocking the synchronization lock, setting that the sending of the short message is failed, turning to step A to continue to send a next short message, and triggering the sending lock module to resend the short message which is sent unsuccessfully after other short messages to be sent are all sent.
